# EUROPÄISCHE PATENTANMELDUNG

(11) **EP 0 935 081 A2**
(43) Veröffentlichungstag der Anmeldung: **11.08.1999**
(21) Anmeldenummer: 99100667.7
(22) Anmeldetag: 15.01.1999
(51) Int. Cl.: F16D 41/12

(54) **Sperrklinke für Überholkupplungen**

(30) Priorität: 09.02.1998 DE 19805032
(71) Anmelder: SRAM Deutschland GmbH, 97404 Schweinfurt (DE)
(72) Erfinder: Meier-Burkamp, Gerhard Dipl.-Ing., 89552 Heidenheim a.d.Brenz (DE)

(57) **Zusammenfassung**

Sperrklinke für Überholkupplungen mit einer Lagerung auf einem Klinkenträger zur Erzeugung einer formschlüssigen Drehverbindung des Klinkenträgers in mindestens einer der beiden Drehrichtungen mit einer Klinkenverzahnung, wobei der Klinkenträger als Stanzteil ausgeführt ist und mindestens einen Klinkensattel aufweist, dessen Formgestaltung die Montage einer Sperrklinke mittels einer Feder erlaubt. Die Sperrklinke liegt an einer gestanzten Schnittkante des Klinkensattels an und pendelt um diese Anlagestelle, wenn die Sperrklinke mit der Klinkenverzahnung zusammenwirkt. Von Vorteil ist die kostengünstige Herstellung und die vielgestaltige Anwendbarkeit.

## Beschreibung

Die Erfindung bezieht sich auf eine Sperrklinke für Überholkupplungen gemäß dem Oberbegriff des Anspruchs 1.

Gemäß der DE 40 25 708 A1 ist eine Sperrklinke für Überholkupplungen bekannt geworden, deren Lagerung in Drehkörpern erfolgt, wobei sich die Bearbeitung dieser Drehkörper lediglich auf den spanenden Arbeitsgang 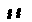 Drehen" beschränkt, wobei die übrigen Formen, insbesondere die Form der Klinkenlagerung, aber auch die Form der Gesperreverzahnung spanlos erfolgt. Die Klinke wird mit ihren Kopf in eine spanlos geformte Tasche eingelegt, wobei sie von einer Feder unter Vorspannung gesetzt wird, die in einer spanend hergestellten Nut verläuft und ein Kippmoment auf die Klinke erzeugt. Alle an der Überholkupplung beteiligten Teile sind spanlos bearbeitet, wobei auf eine spanende Bearbeitung nicht verzichtet worden ist. Letztere ist teuer und, wenn möglich, zu vermeiden.

Aus anderen Veröffentlichungen, z. B. aus der deutschen Patentschrift 813 122 sind Sperrklinken bekannt, die auf Zapfen in einem Klinkenträger gelagert sind, wobei die Klinke eine außen- oder innenliegende Klinkenverzahnung in einer Drehrichtung mit dem Klinkenträger über die Klinken verbindet. Da die Zapfen im Klinkenträger nicht fliegend gelagert werden können, ist es erforderlich, aus einem zylindrischen Ring eine Tasche auszufräsen, wodurch sich zwei Stege bilden, in die eine Bohrung für den Zapfen angebracht ist, auf welchem die Klinke axial gesichert gelagert wird. Auch dieses Verfahren ist nur in Verbindung mit einer spanenden Fertigung zu erreichen.

Der Klinkenträger gemäß der vorliegenden Erfindung ist ein Blechteil, welches an seiner äußeren Begrenzung gestanzt ist und Konturen aufweist, die eine Sperrklinke aufnehmen und axial begrenzen können. Nicht nur der Klinkenträger sondern auch die Sperrklinke ist spanlos hergestellt, wodurch sich eine äußerst kostengünstige Herstellung ergibt. Die Sperrklinke weist eine Form auf, die die Kontur des Klinkensattels in etwa umgreift, wodurch sich eine Sicherung nach praktisch allen Seiten ergibt, sofern die Sperrklinke sich gegenüber der Klinkenverzahnung im Einbauzustand befindet. Die Kontur des Klinkensattels weist noch zusätzliche Aussparungen und Nasen auf, um eine Feder aufzunehmen, mit welcher die Sperrklinke in die Einklinkposition mit der Klinkenverzahnung gedrückt wird. Bei der Konstruktion des Klinkenträgers handelt es sich im vorliegenden Falle um einen um 90° abgewinkelten Klinkensattel, welcher es erlaubt, daß die Klinke nach radial außen gegen eine Klinkenverzahnung wirken kann. Die Sperrklinke kann aber auch auf Klinkenverzahnungen wirken, die jede von der radialen Position der Klinkenverzahnung verschiedene Position einnehmen. Es ist lediglich erforderlich, den Winkel des Klinkensattels gegenüber dem Klinkenträger zu verändern. Soll die Sperrklinke auf eine in axialer Richtung weisende Klinkenverzahnung wirken, so ist es lediglich erforderlich, den Klinkensattel in seiner Kontur zu stanzen, ihn jedoch nicht mehr abzuwinkeln.

Es ist also die Aufgabe der Erfindung, einen Klinkenträger mit Sperrklinken zu schaffen, die ausschließlich spanlos hergestellt sind, wobei die Sperrklinke gegenüber einem Klinkensattel eine Lagerstelle aufweist, die geringe Reibungsverluste aufweist.

Die Lösung dieser Aufgabe ist in den Kennzeichen der Ansprüche 1 und 5 sowie in den Unteransprüchen beschrieben.

Der Zusammenbau einer Sperrklinke mit einem Klinkenträger wird in den anliegenden Figuren dargestellt. Es zeigen:
- Fig. 1: einen Klinkenträger mit drei Sperrklinken, die durch eine Feder in ihrer Position gehalten werden;
- Fig. 2: die Position der Sperrklinke und der Feder zu einem Klinkensattel am Klinkenträger, sowie zu einer Klinkenverzahnung;
- Fig. 3: die Sperrklinke und ihre Anlage an dem Klinkensattel über eine Abrollfläche;

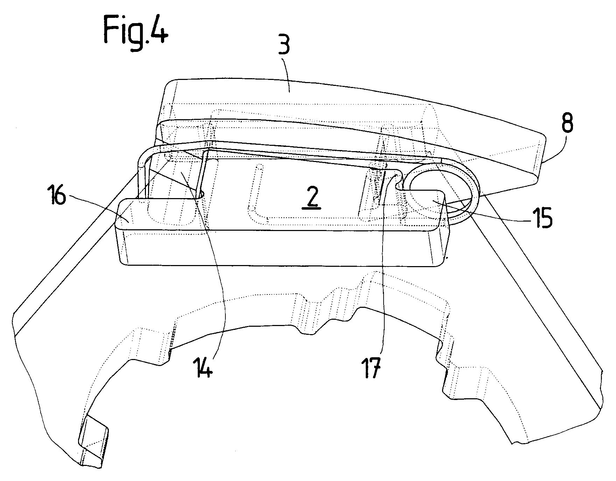

- Fig. 4: den Klinkenträger mit der Sperrklinke und der Feder in montiertem Zustand auf dem Klinkensattel in perspektivischer Ansicht.

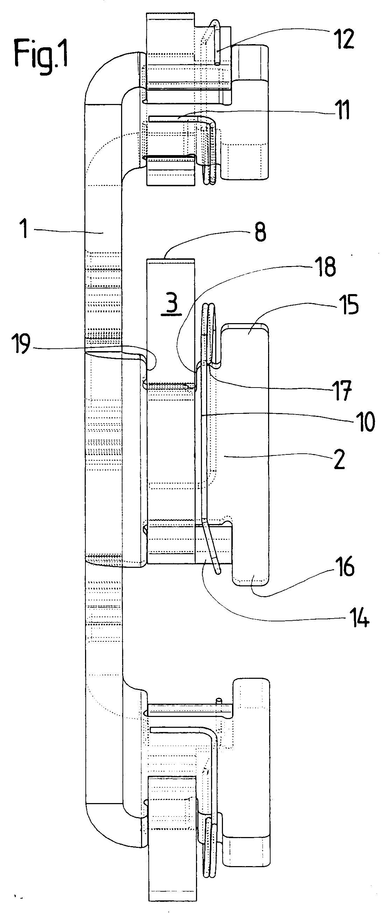

In Fig. 1 ist ein Klinkenträger 1 mit drei Sperrklinken 3 dargestellt, die jede auf einem Klinkensattel 2 angeordnet sind. Die Sperrklinke 3 weist eine Eingriffsnase 8 und einen Abstützansatz 14 auf, welcher mit einer Feder 10 zusammenwirkt. Der gegenüber dem Klinkenträger 1 um 90° angebogene Klinkensattel 2 weist zur axialen Fixierung der Sperrklinke 3 eine erste Anlagefläche 18 und eine zweite Anlagefläche 19 auf, ferner eine erste Begrenzung 15 und eine Nase 17 zur Aufnahme einer Feder 10, und schließlich eine zweite Begrenzung 16 zur axialen Fixierung des Abstützansatzes 14 auf.

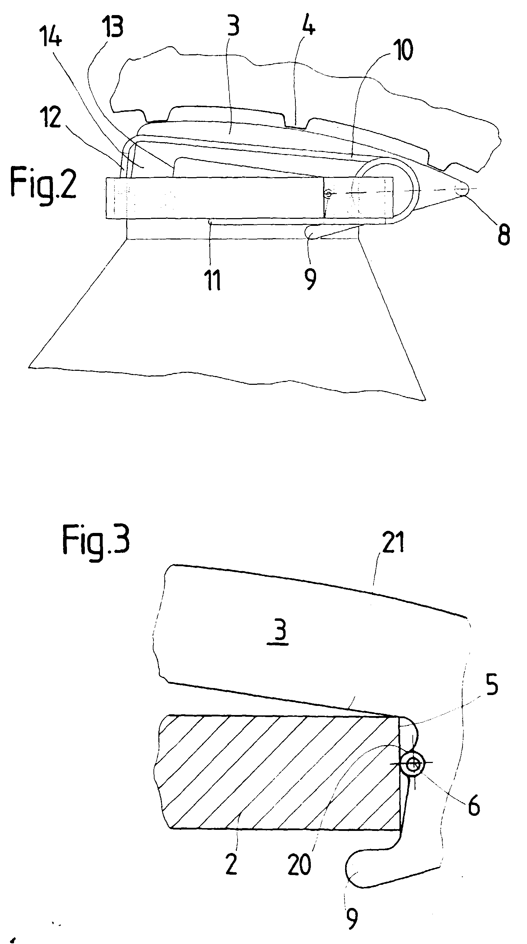

Aus der Fig. 2 läßt sich die Position und Form der Klinke 3 zu dem Klinkensattel 2 ersehen. Es handelt sich bei der Sperrklinke 3 um eine radial nach außen wirkende Klinke, deren Eingriffsnase 8 mit einer Klinkenverzahnung 4 zusammenwirken kann, sofern die Feder 10, deren erstes Federende 11 sich am Klinkensattel 2 abstützt, während eine zweites Federende 12 sich gegen den Abstützansatz 14 der Sperrklinke 3 stemmt, um diesen nach radial innen zu drücken. Der Abstützansatz 14 kommt somit mit der Feder 10 an einem Anlagepunkt 13 in Berührung, der sich ganz in der Nähe des zweiten Federendes 12 befindet, wobei dieses abgewinkelt ist und gegenüber der Sperrklinke 3 einen Anschlag bilden kann. Dieser und die Anlage der als Haarnadelfeder ausgebildeten Feder 10 an der Nase 17 ergeben eine gegenüber der Sperrklinke 3 definierte Position der Feder 10.

Gemäß Fig. 3 ist die mit dem Klinkensattel 2 in Berührung kommende, innere Begrenzung der Sperrklinke 3 dargestellt, die im wesentlichen aus einer Innenkontur 21, einer Abrollfläche 20 und einer Begrenzungsnase 9 besteht. Die Abrollfläche 20 kommt mit einer Anlagefläche 5 des Klinkensattels 2 in Mantellinienform in Berührung, wobei die Abrollfläche einem Radius mit einem Mittelpunkt entspricht, der mit dem Drehpunkt 6 zusammenfällt. Die Sperrklinke 3 hat gegenüber dem Klinkensattel 2 durch den Verlauf der Innenkontur 21 und der Begrenzungsnase 9 einen eingeschränkten Bewegungsspielraum in radialer Richtung, welcher beim Betrieb der Überholkupplung Toleranzen und Maßungenauigkeiten ausgleichen kann. Die Sperrklinke 3 ist an der Anlagefläche 5 über die Abrollfläche 20 also nicht mehr gelagert, sondern nur in eine Berührungsposition gebracht, um die die Sperrklinke 3 kippen kann, wenn die Eingriffsnase 8 mit der Klinkenverzahnung zusammenwirkt. Die beiden beweglichen Teile, nämlich die Sperrklinke 3 und die Feder 10 sind mit dem Klinkensattel 2 sowohl axial als auch in Drehrichtung optimal gegen Herausfallen gesichert, wobei die Funktion in jedem Fall sichergestellt ist.

## Patentansprüche

1. Sperrklinke (3) für Überholkupplungen mit einer Lagerung auf einem Klinkenträger (1) zur Erzeugung einer formschlüssigen Drehverbindung des Klinkenträgers (1) in mindestens einer der beiden Drehrichtungen mit einer Klinkenverzahnung (4),
**dadurch gekennzeichnet,**
daß der Klinkenträger (1) als Stanzteil ausgeführt ist und mindestens einen Klinkensattel (2) aufweist, dessen Formgestaltung die Montage einer Sperrklinke (3) erlaubt.

2. Sperrklinke nach Anspruch 1,
**dadurch gekennzeichnet,**
daß der Klinkensattel (2) aus einem rechtwinklig zum Klinkenträger (1) abgebogenen Blechende besteht, wenn die Klinke (3) in die Klinkenverzahnung (4) radial nach außen oder innen eingreifen muß.

3. Sperrklinke nach Anspruch 1 oder 2,
**dadurch gekennzeichnet,**
daß der Klinkensattel (2) eine erste Anlagefläche (18) und eine zweite Anlagefläche (19) zur axialen Fixierung der Sperrklinke (3) aufweist.

4. Sperrklinke nach einem der Ansprüche 1 bis 3,
**dadurch gekennzeichnet,**
daß der Klinkensattel (2) eine Nase (17) sowie eine erste Begrenzung (15) und eine zweite Begrenzung (16) zur axialen Festlegung einer (10) aufweist.

5. Sperrklinke (3) für Überholkupplungen mit einer Lagerung auf einem Klinkenträger (1) zur Erzeugung einer formschlüssigen Drehverbindung des Klinkenträgers (1) in mindestens einer der beiden Drehrichtungen mit einer Klinkenverzahnung (4),
**dadurch gekennzeichnet,**
daß die Sperrklinke (3) eine Abrollfläche (20) in Radiusform um einen Drehpunkt (6) aufweist, die auf einer Anlagefläche (5) des Klinkensattels (2) frei beweglich anliegt.

6. Sperrklinke nach Anspruch 5,
**dadurch gekennzeichnet,**
daß die Anlagefläche (5) eine geschnittene Blechkante ist.

7. Sperrklinke nach Anspruch 5 oder 6,
**dadurch gekennzeichnet,**
daß die Sperrklinke (3) eine Eingriffsnase (8) aufweist, die mit der Klinkenverzahnung (4) zusammenwirkt, wobei die Eingriffsnase (8) um einen Drehpunkt (6) schwenkt.

8. Sperrklinke nach einem der Ansprüche 1 bis 7,
**dadurch gekennzeichnet,**
daß die Sperrklinke (3) einen Abstützansatz (14) aufweist, der den Klinkensattel (2) umgreift und die Sperrklinke (3) in Verbindung mit einer Begrenzungsnase (9) am Klinkensattel (2) in Umfangsrichtung für beide Drehrichtungen fixiert.

9. Sperrklinke nach einem der Ansprüche 1 bis 8,
**dadurch gekennzeichnet,**
daß die Feder (10) eine zweischenklige Haarnadelfeder ist, deren erstes Federende (11) sich am Klinkensattel (2) abstützt, und deren zweites Federende (12) den Abstützansatz (14) in Richtung Klinkensattel (2) drückt.
